# EUROPEAN PATENT SPECIFICATION

(11) **EP 2 802 134 B1**
(45) Date of publication and mention of the grant of the patent: **11.12.2019**
(21) Application number: 13166961.6
(22) Date of filing: 08.05.2013
(51) Int. Cl.: H04M 3/58, H04M 3/42

(54) **Call-forward initiated by hand movement**
Durch Handbewegung initiierte Anrufweiterleitung
Rappel automatique déclenché par le mouvement de la main.

(43) Date of publication of application: 12.11.2014
(73) Proprietor: Swisscom AG, 3050 Bern (CH)
(72) Inventor: Carr, Tim, 8307 Effretikon (CH); Frank, Fitzlaff, 8135 Langnau (CH)
(74) Representative: P&TS SA (AG, Ltd.)

(56) References cited:
- WO-A2-2007/118250
- US-A1- 2006 091 205
- US-A1- 2012 254 463
- US-B2- 8 306 516

## Description

### Field of the invention

The present invention concerns a method and a communication device for forwarding a call.

### Description of related art

When being at home, sometimes a call is received at a first communication device, even if it is preferred to handle the call over a second communication device. For example a call is received at a cell phone, but the owner of the cell phone prefers to talk over wired-based phone, because the transmission quality is better. Another example could be, when a video call is received at a phone without display or video capabilities or where the transmission capabilities of the phone are low, it is often desired to transfer the call to a special video phone or other communication device with a display and with an internet access. The prior art offers only to transfer a conventional call by manually selecting with keys or touch screen of the first communication device the function call-forward and entering or selecting the phone number of the second communication device. Since the small displays of mobile phones and even of smart phones have to provide several other functions, it needs often a complex interaction with the keys or touch screen of the first communication device to select the function of a call-forward. Therefore, instead of the necessity to transfer calls on other communication devices, this function is rarely used in the state of the art. Only in some closed telephone systems, where another phone can be addressed by a short intern number, call-forwards are actually used. However, such a system cannot easily be generalized to forwarding calls to any communication device not being part of the same closed telephone system.

US2006/0091205 discloses a method for forwarding a call according to the introductory portion of the independent claims. In D1, a call is forwarded on the basis of the direction of movement of a user relative to a further communication device.

WO2007/118250 discloses that a call is forwarded from one communication device to another communication device, when the first communication device comes in close proximity of a second communication device, an ongoing call is forwarded from the first to the second communication device.

US8306516 and US2012/254563 represent other examples of prior art documents.

### Brief summary of the invention

It is an object of the invention to overcome the problems of the state of the art and find a method and system for forwarding a call received at a first communication device to a second communication device which is intuitive to handle.

These aims are achieved by the method, by a computer program and by a system according to the independent claims. The second communication device is identified on the basis of the direction of the movement of the first communication device relative to the second communication device.

This has the advantage that the user does not have any more to navigate through complex user interfaces of the first communication device to select the call-forwarding function and to select the second communication device. The user simply has to move the first communication device in the direction of the second communication device and the call forward is initiated to the desired second communication device.

The dependent claims refer to further advantageous embodiments.

In one embodiment, a movement of the first communication device is measured, the measured movement is compared with a predetermined movement characteristics, and based on the comparison result, the call is forwarded to the second communication device. This has the advantage that the call forward is initiated by detecting a movement with predetermined movement characteristics. Therefore, not only the second communication device is identified by the movement, but also the desire of the user to forward a call is expressed by a certain movement.

In one embodiment, the predetermined movement corresponds to a movement of a hand performing a throw movement. This movements is on the one hand side well-adapted to express a direction and on the other hand side not so usual that a call is forwarded without the desire of the user.

In one embodiment, the direction is determined on the basis of the trajectory of the movement.

In one embodiment, the second communication device is identified among at least one communication device detected via at least one local connection. This has the advantage that the local connection to at least one communication device already allows to restrict the communication devices to a certain amount among which the second communication device has to be identified.

In one embodiment, the call is forwarded to the second communication device over said local connection.

In one embodiment, the call is established over a first communication network between a server and the first communication device, and the call is forwarded by the server to the second communication device by switching the established call from the first communication device and the first communication network to the second communication device over a second communication network. This has the advantage that the transmission and device characteristics of the forwarded call at the second communication device do not depend any more on the transmission and device characteristics of the call established over the first communication network at the first communication device.

In one embodiment, identifying the second communication device comprises determining an identifier of the second communication device in the second communication network, and forwarding the call comprises switching the call in the server from the first communication device to the second communication device on the basis of the determined identifier.

In one embodiment, the identifier comprises at least one of a phone number, an internet protocol address and subscriber identity module information.

In one embodiment, the second communication device is identified on the basis of the determined direction, a reference direction, the position of the first communication device and the position of the second communication device.

In one embodiment, the position of the first communication device and/or of the second communication device is determined on the basis of at least one of a local network providing a local connection between the first communication device and the second communication device, a cellular phone network and a satellite based global positioning system.

In one embodiment, the reference direction is determined on the basis of at least one of a magnetic field of the earth and a local connection between the first communication device and the second communication device.

Method according to any of the previous claims, wherein the first communication device is connected to a cellular phone network as a first communication network and the second communication device is connected to at least one of a mobile phone network, internet and wire-based public switched telephone network as a second communication network.

### Brief Description of the Drawings

The invention will be better understood with the aid of the description of an embodiment given by way of example and illustrated by the figures, in which:
Fig. 1 shows an embodiment of a system for a call-forward;
Fig. 2 shows an embodiment of a method for a call-forward;
Fig. 3 shows an embodiment of a method for identifying a second communication device;
Fig. 4 shows an embodiment of the sections of the system for a call-forward;
Fig. 5 shows a first embodiment of the arrangement of the sections of the system for a call-forward;
Fig. 6 shows a second embodiment of the arrangement of the sections of the system for a call-forward;
Fig. 7 shows a third embodiment of the arrangement of the sections of the system for a call-forward; and
Fig. 8 shows a fourth embodiment of the arrangement of the sections of the system for a call-forward.

### Detailed Description of possible embodiments of the Invention

The invention refers to forwarding a call from a first communication device to a second communication device which is arranged in the vicinity of the first communication device. A call means any real time and bidirectional communication transmitting information between at least two communication devices in real time, e.g. a conventional voice or video call, a voice or video call using internet protocol (IP) telephony or also a messenger connection.

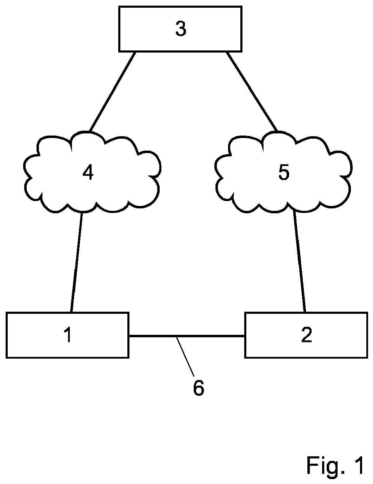

Fig. 1 shows an embodiment of a system for a call-forward comprising a first communication device 1, at least one second communication device 2 and a server 3. The first communication device 1 is connected with the server 3 over a first communication network 4. The second communication device 2 is connected with the server 3 over a second communication network 5. The first communication device 1 is connected with the at least one second communication device 2 over a local connection 6.

The first communication device 1 is configured to establish calls over the first communication network, to identify the second communication device 2, and to transfer a call to identified second communication device 2. Establishing a call includes receiving a call and initiating a call. In one embodiment, the first communication device 1 is a mobile cellular device which is identifiable on the basis of a subscriber identity module (SIM) entered in the mobile cellular device, e.g. a mobile phone, a mobile smart phone, a tablet, a mobile computer. The mobile cellular device is identifiable via information stored on the SIM like the international mobile subscriber number (IMSI) or via the phone number corresponding to the SIM. Therefore, a call can be switched by a mobile cellular telephone network like Global System for Mobil Communications) GSM, Universal Mobile Telecommunications System (UMTS), Long Term Evolution (LTE) or other mobile phone standards defined by European Telecommunications Standards Institute (ETSI) as examples of the first communication network 4 to the mobile cellular device. However, the call can also be transferred via the internet or the internet and a cellular phone network as first communication network 4 to the mobile cellular device using internet protocol (IP) telephony. In one embodiment, the first communication device 1 is portable and communicates with the server 3 over the air. This includes also mobile telephones communicating wireless, e.g. using the digital enhanced cordless telecommunications (DECT), with a base station which is connected via a landline to the landline telephone network or public switched telephone network (PSTN). As already mentioned, in one embodiment, the first communication device 1 is a landline based telephone configured to establish via the server 3 a call over the PSTN as an example of the first communication network 4. In one embodiment, the first communication device 1 is configured to communicate to the internet as an example of the first communication network 4 and to establish calls by IP telephony via the server 3.

The second communication device 2 is configured to receive a call forwarded from the first communication device 1. In one embodiment, the call is forwarded to the second communication device 2 over the local connection 6. In this embodiment, the second communication network 5 is superfluous. In another embodiment, the forwarded call is received from the server 3 over the second communication network 5, wherein the server 3 has switched the call to the second communication device 2 such that the call does not pass the first communication device 1 anymore. In this embodiment, the local connection 6 between the first communication device 1 and the second communication device 2 is not necessarily needed. In one embodiment, the first and the second communication network 4 and 5 are the same and in another embodiment, they are different. In one embodiment, the second communication network 5 is at least one of PSTN, mobile cellular phone network and internet and the second communication device 2 is configured to receive forwarded calls over the respective protocol/transmission-coding of the second communication network 5. In a preferred embodiment, the first communication device 1 and the second communication device 2 are connected over a local connection 6. This local connection 6 is preferably wireless, but can also be wire-based. In one embodiment, the local connection 6 is a direct connection between the first communication device 1 and the second communication device 2 without a further transmission device in between. In one embodiment, the local connection 6 is an indirect connection between the first communication device 1 and the second communication device 2 comprising a further transmission device like a router or hub in between. Examples for local connections 6 are Bluetooth, Wireless Local Area Network (WLAN), infrared, a transponder connection like RFID, DECT or Near Field Communication (NFC). The local connection 6 can also be established by power line communication (PLC), i.e. over a conductor that is simultaneously for alternating current (AC) electric power transmission. Instead of the first communication device 1 and/or the second communication device 2, their charging stations could communicate over the power line.

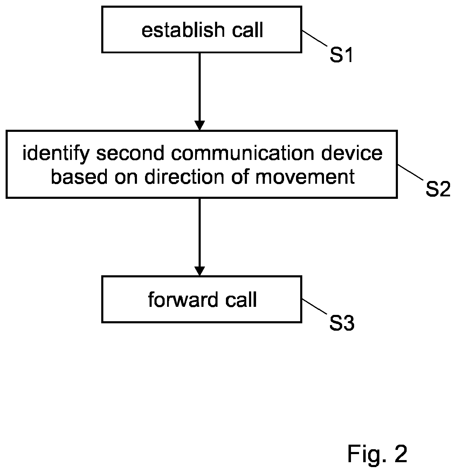

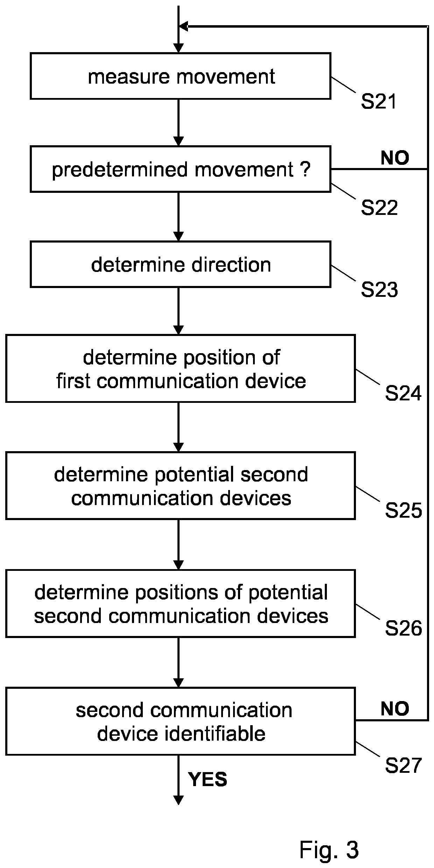

Fig. 2 shows the method for forwarding a call between the first and the second communication device. In step S1, a call is established at the first communication device 1. This includes receiving or initiating a call at the first communication device 1. In step S2, a second communication device 2 is identified on the basis of a movement of the first communication device 1 as described in more detail in relation to Fig. 3. In step S4, a call is forwarded to the second communication device 2 identified in the third step S2.

In one embodiment of step S4, the call established at the first communication device 1 can be forwarded over the local connection 6 to the second communication device 2. In this case, the second communication device 2 does not necessarily need a connection to the second communication network 5 to receive the forwarded call. This could be advantageous, when only another kind of communication device 2 is preferred for talking without the necessity to change the communication network. In one example, when a bigger display is needed for a video call, the call can be forwarded to a television which includes also a microphone by the local connection 6. Alternatively, only the image part of the call can be forwarded to the television and the voice is kept at the first communication device 1. Therefore, the first communication device 1 can display a list of possible forwarding possibilities, wherefrom the user selects the desired one. Such possible forwarding possibilities could be: only voice communication, only video communication or complete call. In another example, the user could prefer to establish a phone call instead of at the mobile phone or tablet as first communication device 1 at a second communication device 2 like a landline phone which is more comfortable for talking.

In a preferred embodiment of step S4, the server 3 forwards the call to the second communication device 2 and switches the call from the first communication device 1 to the second communication device 2. Consequently, the call has not to pass through the first communication network 4 and the first communication device 1, but is switched to the second communication device 2 so that the call is connected from at least one the communication device on the other side of the call over the server 3 over the second communication network 5 to the second communication device 2. This is especially advantageous, if the call forward is initiated for changing the transmission characteristics of the call. For example, a video call received at a mobile cell phone as a first communication device 1 with a lower transmission capability should be transferred as IP video phone call to a computer as second communication device 2 over the internet as second communication network 5 which has larger bandwidth as the mobile cellular phone network as first communication network 4.

Fig. 3 shows in more detail the identification of the second communication device 2 of step S2. In step S21, the movement of the first communication device 1 is measured. The movement can be represented by a time series of position, velocity and/or acceleration vectors of the first communication device 1. In one embodiment, the movement is measured by an acceleration sensor in the first communication device 1. The series of acceleration values over the time can be used to determine a trajectory and/or a velocity profile of the first communication device 1. In another embodiment, a sensor in the first communication device 1 could determine the position of the first communication device 1 over time in order to determine the trajectory and/or velocity profile. For example, satellite based position systems like the Global Positioning System (GPS) could be used in the future, if the position determination becomes more exact. Also other sensors could be used which work on locally installed position determining systems. In one embodiment, the position of the first communication device 1 over time could be determined outside of the first communication device 1, e.g. by the first communication network 4 (e.g. mobile cellular phone network) or by a local network providing the local connection 6 (e.g. by a WLAN-router).

In step S22, the measured movement of the first communication device 1 is compared with predetermined movement characteristics. In a preferred embodiment, characteristics of a movement of the first communication device 1 performing the movement of a hand throwing something (throw movement) is used as predetermined movement characteristics. E.g. the absolute velocity or acceleration over time can be used to detect typical throw speed/acceleration profiles. However, alternatively or additionally it can be checked in the trajectory of the first communication device 1 fulfils the characteristics of a trajectory of a throw movement. Examples of characteristics of a throw movement are: the trajectory should be within one plane in the three-dimensional space, the trajectory should comprise a curvature (maybe only one curvature), the trajectory should locally and timely not be longer than a certain value, etc.. In order to detect such predetermined movement characteristics in the measured movement, preferably statistical methods are used. If such a predetermined movement characteristic is detected in the movement of the first communication device 1, the method continues with step S23, otherwise the method goes back to S21 and continues to measure the movement and to compare the measured movement with the predetermined movement characteristics. The step S22 is preferably performed in the same device which measures the movement of the first communication device 1.

In step S23, the movement of the first communication device 1 corresponding to the predetermined movement characteristics, i.e. the corresponding time period of the measured movement, is used to determine a direction of said movement. The direction of said movement could be computed by determining an average velocity direction of said movement. If the movement is measured in step S21 on the basis of velocity or acceleration measurements in the first communication device 1, at least one reference direction is required for calibrating the coordinate system of the first communication device 1 and to determine the direction of the movement. In one embodiment, the magnetic field of the earth can be used as reference direction. In another embodiment, the reference direction can be determined by determining the angle from which connection signals of the local connection 6 are received, e.g. by several antennas. Additionally, the direction of gravitation can be used as reference direction. In one embodiment, a combination of the mentioned reference directions is used.

Once the direction of the movement is determined in S23, in step S24 the position of the first communication device 1 is determined. The position can be obtained by a satellite based position system like GPS by a corresponding sensor in the first communication device 1, by the first communication network 4, e.g. by triangulation of different base stations of the network 4, by the local network of the local connection 6, e.g. by triangulation of several WLAN router, by a separate locally arranged system for determining the position or a combination of those. The position of the first communication device 1 can also be determined on the basis of a predetermined position of the first communication device 1 or a part of the first communication device 1. For example, if the first communication device 1 is fixed at a certain position, the position could manually be entered in the first communication device 1, when installing the phone. If the first communication device 1 is portable, but has a charging station at a fixed position, the position could be stored and used always when the first communication device 1 is connected with the charging station.

In step S25, potential second communication devices 2 for forwarding the call are identified. In one embodiment, the second communication devices 2 in the vicinity of the first communication device 1 are detected as potential second communication devices 2. In one embodiment, the second communication devices 2 in the vicinity suitable for receiving the forwarded call are detected as a second communication device 2. In one embodiment, the potential second communication devices 2 in the vicinity are detected on the basis of the local connections 6 between the first communication device 1 and the second communication devices 2. This detection can be performed in a device of the local network, e.g. a WLAN router, or in the first communication device 1. In one embodiment, after potential second communication devices 2 have been detected in the vicinity, the list can be restricted to the ones which are suitable for receiving the forwarded call with the characteristics of the call. However, this test can also be performed later after the second communication device 2 has been identified. In addition, the second communication devices 2 might be related to authorized identities which could be compared to an identity of the first communication device 1, in order to select the second communication devices 2 being authorized for the identity of the first communication device 1. The identity might be a hardware identity like the SIM card but may also be a software identity like login information. In step S26, the positions of the potential second communication devices 2 are determined. The position can be determined as described with the first communication device 1.

In step S27, it is checked on the basis of the position of the first communication device 1, the positions of the potential second communication devices 2 and the direction, if one second communication device 2 has been identified. If none of the potential second communication devices 2 has been identified, the method goes back to S21. Otherwise in step S3, the call at the first communication device 1 is forwarded to the second communication device 2 identified in S27. If more than one second communication devices 2 are identified by said direction, automatic rules could apply to select one (e.g. the closest one or the smallest angle derivation from said direction) or the first communication device 1 requests a user input for selecting one of the identified second communication devices 2.

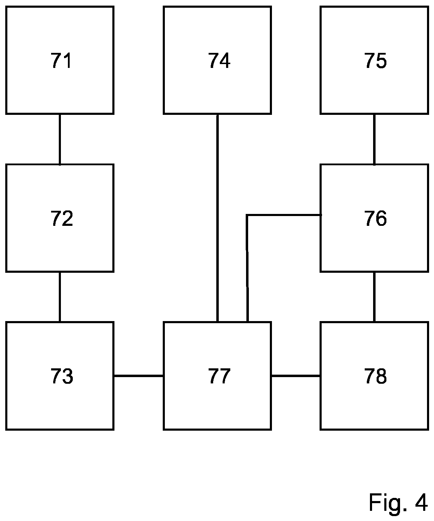

Fig. 4 shows an embodiment of a system for forwarding a call. The system comprises a movement sensor 71, a movement detector 72, a direction detector 73, a first position sensor 74, a communication device detector 75, a second position sensor 76, a communication device identifier 77 and a call forwarder 78.

The movement sensor 71 is configured to measure the movement of the first communication device 1 as described with step S21. The movement sensor 71 is connected with the movement detector 72 which is configured to detect a predetermined movement characteristic in the movement received from the movement sensor 71 as described with step S22. The movement detector 72 is connected with the direction detector 73 which detects a direction on the basis of the detected movement received from the movement detector 72 as described with step S23. The detected direction is transmitted to the communication device identifier 77. The first position sensor 74 is configured to determine the position of the first communication device 1 as described with step S24 and to transmit the determined position to the communication device identifier 77. If the first communication device 1 is fixed at a certain position, the position of the first communication device 1 could manually be entered in the first position sensor 74. The communication device detector 75 is configured to detect potential second communication devices 2 in the vicinity of the first communication device 1 as described with step S25 and to forward the at least one potential second communication device 2 detected to the second position sensor 76. The second position sensor 76 is configured to determine the position of all potential second communication devices 2 received from the communication device detector 75 as described with step S26 and to forward the positions of the potential second communication devices 2 to the communication device identifier 77. The communication device identifier 77 is configured to identify an amount of second communication devices 2 on the basis of the received position of the first communication device 1, the positions of the potential second communication devices 2 and the direction of the movement as described in step S27. The amount of second communication devices 2 could comprise zero, one or more second communication devices 2. In the case of zero second communication devices 2, no second communication device 2 has been identified to forward the call and the call is not forwarded. In the case of one second communication device 2, the information about the one second communication device 2 is sent to the call forwarder 78. In the case of more second communication devices 2, further information like user input or further position information have to be used to restrict the identified second communication devices 2 to one identified second communication device 2 which is then forwarded to the call forwarder 78. The call forwarder 78 is configured to initiate the call forward from the first communication device 1 to the identified second communication device 2 as described with step S3.

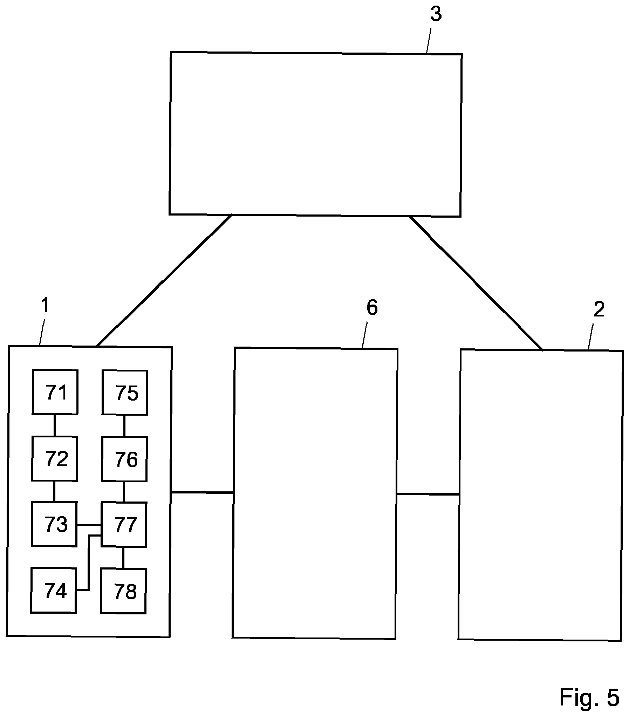

Fig. 5 shows one embodiment of the system for forwarding a call comprising the first communication device 1, the second communication device 2, the server 3 and the local connection 6. In this embodiment, the movement sensor 71, the movement detector 72, the direction detector 73, the first position sensor 74, the communication device detector 75, the second position sensor 76, the communication device identifier 77 and the call forwarder 78 are arranged in the first communication device 1. The movement of the first communication device 1 can be retrieved in the movement sensor 71 by the way of an acceleration sensor or by other position sensors. The list of potential second communication devices 2 can be determined on the basis of the communication devices detected or connected by the local connection 6 in the communication device detector 75. The position of the potential second communication devices 2 can be received from the local network 6 or the second communication devices 2 in the second position sensor 76. For fixed second communication devices 2, the position of the second communication devices 2 could be stored directly in the second position sensor 76 or alternatively, stored in each second communication device 2 which communicates its position over the local connection 6, e.g. by PLC. The call forwarder 78 is configured to directly forward the call over the local connection 6 or by directly forwarding the call over the first and second communication networks 4 and 5 using the identification information of the second communication device 2 in the second communication network 5. This information could be received over the local network 6 in the call forwarder 78. Alternatively, the call forwarder 78 is configured to send a message to the server 3 to switch the call from the first communication device 1 to the second communication device 2.

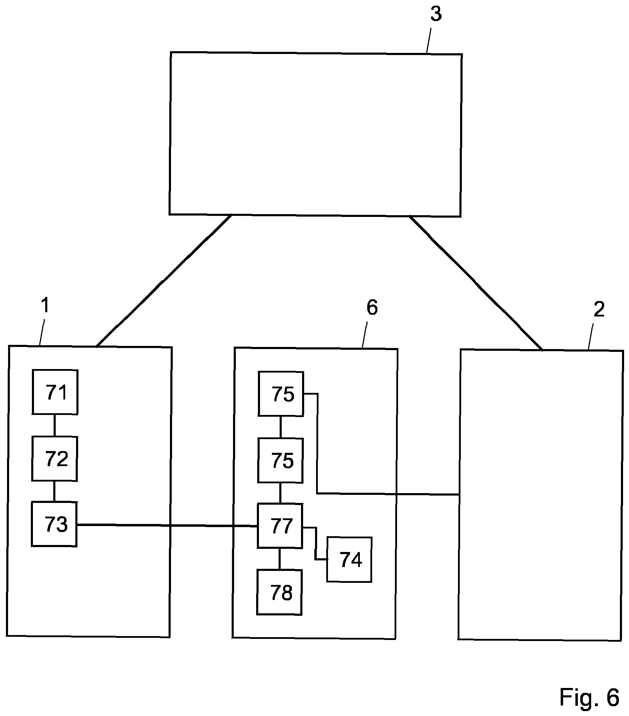

Fig. 6 shows one embodiment of the system for forwarding a call comprising the first communication device 1, the second communication device 2, the server 3 and the local connection 6. In this embodiment, the movement sensor 71, the movement detector 72 and the direction detector 73 are arranged in the first communication device 1. The first position sensor 74, the communication device detector 75, the second position sensor 76, the communication device identifier 77 and the call forwarder 78 are arranged in the network of the local connection 6, e.g. in a router of the local network like a WLAN router. The movement of the first communication device 1 can be retrieved in the movement sensor 71 by the way of an acceleration sensor or by other position sensors. The direction retrieved from the movement in the direction detector 73 is sent to the communication device identifier 77 in the local connection 6. The list of potential second communication devices 2 can be determined on the basis of the communication devices detected or connected by the local connection 6 in the communication device detector 75. The position of the potential second communication devices 2 can be determined by the local network 6 or received from the second communication devices 2 in the second position sensor 76. In one embodiment, the call forwarder 78 is configured to send a message to the server 3 to switch the call from the first communication device 1 to the second communication device 2. In one embodiment, the call forwarder 78 is configured to send a message to the first communication device 1 to forward the call from the first communication device 1 to the second communication device 2. In an alternative embodiment, the movement sensor 71, the movement detector 72 and the direction detector 73 could also be arranged in the local connection 6 such that the movement of the first communication device 1 is determined directly by the local network of the local connection 6.

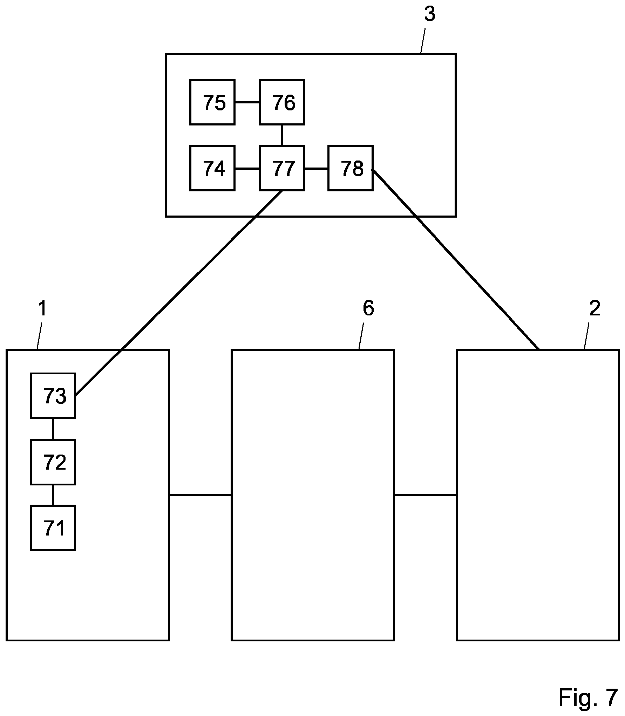

Fig. 7 shows one embodiment of the system for forwarding a call comprising the first communication device 1, the second communication device 2, the server 3 and the local connection 6. In this embodiment, the movement sensor 71, the movement detector 72 and the direction detector 73 are arranged in the first communication device 1. The first position sensor 74, the communication device detector 75, the second position sensor 76, the communication device identifier 77 and the call forwarder 78 are arranged in the server 3, e.g. in a server 3 of the cellular phone network or of the internet. The movement of the first communication device 1 can be retrieved in the movement sensor 71 by the way of an acceleration sensor or by other position sensors. The direction retrieved from the movement in the direction detector 73 is sent to the communication device identifier 77 in the local connection 6. The list of potential second communication devices 2 can be determined on the basis of the communication devices detected or connected by the local connection 6 which informs the communication device detector 75 in the server 3 over the first or second communication network 4 or 5 or a third communication network. In this case, the position of the potential second communication devices 2 can be received from the local network 6 or the second communication devices 2 in the second position sensor 76. Alternatively, the list of potential second communication devices 2 can be determined on the basis of the communication devices registered in the second communication network 5 in the vicinity of the first communication device 1. The second communication devices 2 could use different second communication networks 5 and the communication detector 75 could retrieve the positions of the second communication devices 2 in the vicinity of the first communication device 1 from the different second communication networks 5. In this case, the position of the second communication devices 2 can be forwarded to the second position sensor 76. The call forwarder 78 is configured to switch the call from the first communication device 1 to the second communication device 2.

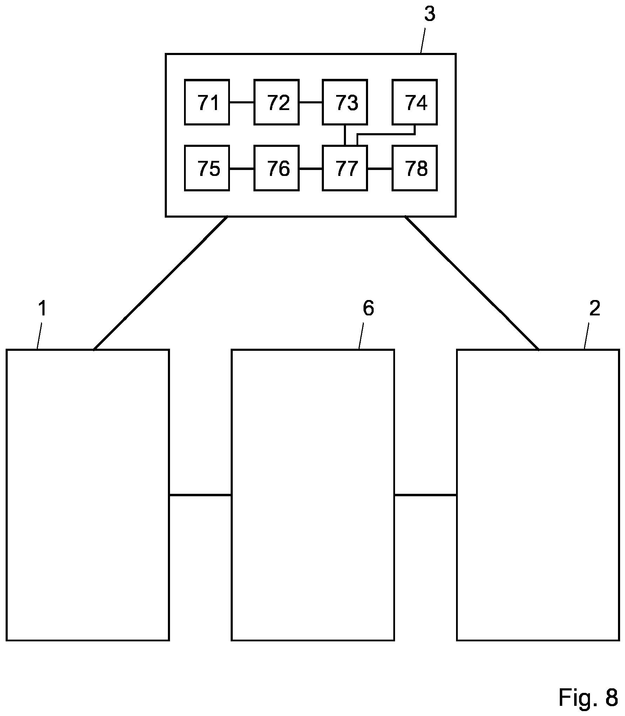

Fig. 8 shows one embodiment of the system for forwarding a call comprising the first communication device 1, the second communication device 2, the server 3 and the local connection 6. In this embodiment, the movement sensor 71, the movement detector 72, the direction detector 73, the first position sensor 74, the communication device detector 75, the second position sensor 76, the communication device identifier 77 and the call forwarder 78 are arranged in the server 3, e.g. in a server 3 of the cellular phone network or of the internet. The movement of the first communication device 1 can be retrieved through the first communication network 4, e.g. by triangulation between different contacted cells. The remaining embodiment corresponds to the embodiment described in Fig. 7.

## Claims

1. Method for forwarding a call from a first communication device (1) to a second communication device (2), the method comprises the steps of:
detecting the second communication device(2);
forwarding an established call from the first communication device to the second communication device (2);
**characterized in that**
a movement of the first communication device (1) is measured,
the measured movement is compared with a predetermined movement characteristic, and
if such a predetermined movement characteristic is detected in the measured movement, the second communication device (2) is selected among one or more detected communication devices to forward the call on the basis of a direction of the measured movement of the first communication device (1) relative to the second communication device (2),
wherein the predetermined movement corresponds to a movement of a hand performing a throw movement.

2. Method according to the previous claim, wherein a velocity or an acceleration of the first communication device (1) is used to detect a typical throw speed profile or throw acceleration profile as predetermined movement characteristic, or a trajectory of the first communication device (1) is used to detect a trajectory of a throw movement as a predetermined movement characteristic.

3. Method according to any of the previous claims, wherein the direction is determined on the basis of the trajectory of the movement.

4. Method according to any of the previous claims, wherein the second communication device (2) is identified among the at least one communication device detected via at least one local connection (6).

5. Method according to the previous claim, wherein the call is forwarded to the second communication device (2) over the local connection (6).

6. Method according to any of the previous claims, wherein the call is established over a first communication network (1) between a server (3) and the first communication device (1), and the call is forwarded by the server (3) to the second communication device (2) by switching the established call from the first communication device (1) and the first communication network (4) to the second communication device (2) over a second communication network (5).

7. Method according to the previous claim, wherein detecting the second communication device (2) comprises determining an identifier of the second communication device (2) in the second communication network (5), and wherein forwarding the call comprises switching the call in the server (3) from the first communication device (1) to the second communication device (2) on the basis of the determined identifier.

8. Method according to the previous claim, wherein the identifier comprises at least one of a phone number, an internet protocol address and subscriber identity module information.

9. Method according to any of the previous claims, wherein the second communication device (2) is detected on the basis of the determined direction, a reference direction, the position of the first communication device (1) and the position of the second communication device (2).

10. Method according to the previous claim, wherein the position of the first communication device (1) and/or of the second communication device (2) is determined on the basis of at least one of a local network providing a local connection (6) between the first communication device (1) and the second communication device (2), a mobile phone network and a satellite based global positioning system.

11. Method according to claim 9 or 10, wherein reference direction is determined on the basis of at least one of a magnetic field of the earth and a local connection (6) between the first communication device (1) and the second communication device (2).

12. Method according to any of the previous claims, wherein the first communication device (1) is connected to a mobile phone network as a first communication network (4) and the second communication device (2) is connected to at least one of a mobile phone network, internet and wire-based public switched telephone network as a second communication network (5).

13. A computer program configured to execute the method according to one of the previous claims on a processing unit.

14. A system for forwarding a call from a first communication device (1) to a second communication device (2) comprising:
a communication device identifier (77) for detecting the second communication device (2);
a call forwarder (78) for forwarding a call established at the first communication device (1) to the detected second communication device (2);
**characterized by**
a movement sensor (71) for measuring a movement of the first communication device (1),
a movement detector (72) for comparing the measured movement with a predetermined movement characteristic, and
a direction detector (73) for detecting, if such a predetermined movement characteristic is detected in the measured movement, a direction of the measured movement of the first communication device (1) relative to the second communication device (2), wherein the communication device identifier (77) is configured to select the second communication device (2) among one or more detected communication devices to forward the call on the basis of the detected direction, wherein the predetermined movement corresponds to a movement of a hand performing a throw movement.

## Patentansprüche

1. Verfahren zum Weiterleiten eines Anrufs von einer ersten Kommunikationsvorrichtung (1) zu einer zweiten Kommunikationsvorrichtung (2), wobei das Verfahren die folgenden Schritte umfasst:
Erfassen der zweiten Kommunikationsvorrichtung (2);
Weiterleiten eines bestehenden Anrufs von der ersten Kommunikationsvorrichtung zu der zweiten Kommunikationsvorrichtung (2);
**dadurch gekennzeichnet, dass**
eine Bewegung der ersten Kommunikationsvorrichtung (1) gemessen wird,
die gemessene Bewegung mit einer vorbestimmten Bewegungscharakteristik verglichen wird, und
wenn eine solche vorbestimmte Bewegungscharakteristik in der gemessenen Bewegung erfasst wird, die zweite Kommunikationsvorrichtung (2) aus einer oder mehreren erfassten Kommunikationsvorrichtungen ausgewählt wird, um den Anruf basierend auf einer Richtung der gemessenen Bewegung der ersten Kommunikationsvorrichtung (1) relativ zur zweiten Kommunikationsvorrichtung (2) weiterzuleiten,
wobei die vorbestimmte Bewegung einer Bewegung einer Hand entspricht, die eine Wurfbewegung ausführt.

2. Verfahren nach dem vorhergehenden Anspruch, wobei eine Geschwindigkeit oder eine Beschleunigung der ersten Kommunikationsvorrichtung (1) verwendet wird, um ein typisches Wurfgeschwindigkeitsprofil oder Wurfbeschleunigungsprofil als vorbestimmte Bewegungscharakteristik zu erfassen, oder eine Bewegungsbahn der ersten Kommunikationsvorrichtung (1) verwendet wird, um eine Bewegungsbahn einer Wurfbewegung als vorbestimmte Bewegungscharakteristik zu erfassen.

3. Verfahren nach einem der vorhergehenden Ansprüche, wobei die Richtung basierend auf der Bewegungsbahn bestimmt wird.

4. Verfahren nach einem der vorhergehenden Ansprüche, wobei die zweite Kommunikationsvorrichtung (2) unter der mindestens einen Kommunikationsvorrichtung identifiziert wird, die über mindestens eine lokale Verbindung (6) erfasst wird.

5. Verfahren nach dem vorhergehenden Anspruch, wobei der Anruf über die lokale Verbindung (6) an die zweite Kommunikationsvorrichtung (2) weitergeleitet wird.

6. Verfahren nach einem der vorhergehenden Ansprüche, wobei der Anruf über ein erstes Kommunikationsnetzwerk (1) zwischen einem Server (3) und der ersten Kommunikationsvorrichtung (1) aufgebaut wird und der Anruf durch den Server (3) an die zweite Kommunikationsvorrichtung (2) weitergeleitet wird, indem der hergestellte Anruf von der ersten Kommunikationsvorrichtung (1) und dem ersten Kommunikationsnetzwerk (4) an die zweite Kommunikationsvorrichtung (2) über ein zweites Kommunikationsnetzwerk (5) weitergeleitet wird.

7. Verfahren nach dem vorhergehenden Anspruch, wobei das Erfassen der zweiten Kommunikationsvorrichtung (2) das Bestimmen eines Identifikators der zweiten Kommunikationsvorrichtung (2) im zweiten Kommunikationsnetzwerk (5) umfasst und wobei die Anrufweiterleitung das Schalten des Anrufs im Server (3) von der ersten Kommunikationsvorrichtung (1) zur zweiten Kommunikationsvorrichtung (2) basierend auf dem bestimmten Identifikator umfasst.

8. Verfahren nach dem vorhergehenden Anspruch, wobei der Identifikator mindestens eines von einer Telefonnummer, einer Internetprotokolladresse und einer Teilnehmeridentitätsmodulinformation umfasst.

9. Verfahren nach einem der vorhergehenden Ansprüche, wobei die zweite Kommunikationsvorrichtung (2) basierend auf der bestimmten Richtung, einer Referenzrichtung, der Position der ersten Kommunikationsvorrichtung (1) und der Position der zweiten Kommunikationsvorrichtung (2) erfasst wird.

10. Verfahren nach dem vorhergehenden Anspruch, wobei die Position der ersten Kommunikationsvorrichtung (1) und/oder der zweiten Kommunikationsvorrichtung (2) basierend auf mindestens einem von einem lokalen Netzwerk, das eine lokale Verbindung (6) zwischen der ersten Kommunikationsvorrichtung (1) und der zweiten Kommunikationsvorrichtung (2) bereitstellt, einem Mobilfunknetz und einem satellitengestützten globalen Ortungssystem bestimmt wird.

11. Verfahren nach Anspruch 9 oder 10, wobei die Referenzrichtung basierend auf mindestens einem von einem Magnetfeld der Erde und einer lokalen Verbindung (6) zwischen der ersten Kommunikationsvorrichtung (1) und der zweiten Kommunikationsvorrichtung (2) bestimmt wird.

12. Verfahren nach einem der vorhergehenden Ansprüche, wobei die erste Kommunikationsvorrichtung (1) als erstes Kommunikationsnetz (4) mit einem Mobilfunknetz und die zweite Kommunikationsvorrichtung (2) mit mindestens einem aus einem Mobilfunknetz, einem Internet und einem drahtgebundenen öffentlichen Telefonnetz als zweites Kommunikationsnetz (5) verbunden wird.

13. Computerprogramm, das dazu eingerichtet ist, das Verfahren gemäß einem der vorhergehenden Ansprüche auf einer Verarbeitungseinheit auszuführen.

14. Ein System zum Weiterleiten eines Anrufs von einer ersten Kommunikationsvorrichtung (1) zu einer zweiten Kommunikationsvorrichtung (2), umfassend:
einen Kommunikationsgeräte-Identifikator (77) zum Erfassen der zweiten Kommunikationsvorrichtung (2);
einen Anrufweiterleiter (78) zum Weiterleiten eines an der ersten Kommunikationsvorrichtung (1) aufgebauten Anrufs zu der erfassten zweiten Kommunikationsvorrichtung (2);
**gekennzeichnet durch**
einen Bewegungssensor (71) zum Messen einer Bewegung der ersten Kommunikationsvorrichtung (1),
einen Bewegungsdetektor (72) zum Vergleichen der gemessenen Bewegung mit einer vorbestimmten Bewegungscharakteristik und
einen Richtungsdetektor (73) zum Erfassen einer Richtung der gemessenen Bewegung der ersten Kommunikationsvorrichtung (1) relativ zur zweiten Kommunikationsvorrichtung (2), wenn eine solche vorbestimmte Bewegungscharakteristik in der gemessenen Bewegung erfasst wird,
wobei der Kommunikationsvorrichtungs-Identifikator (77) dazu eingerichtet ist, die zweite Kommunikationsvorrichtung (2) unter einer oder mehreren erfassten Kommunikationsvorrichtungen auszuwählen, um den Anruf basierend auf der erfassten Richtung weiterzuleiten, wobei die vorbestimmte Bewegung einer Bewegung einer Hand entspricht, die eine Wurfbewegung ausführt.

## Revendications

1. Procédé permettant de transférer un appel depuis un premier dispositif de communication (1) vers un deuxième dispositif de communication (2), le procédé comprenant les étapes suivantes :
détecter le deuxième dispositif de communication (2);
transférer un appel établi depuis le premier dispositif de communication vers le deuxième dispositif de communication (2) ;
**caractérisé en ce que**
un mouvement du premier dispositif de communication (1) est mesuré,
le mouvement mesuré est comparé à une caractéristique de mouvement prédéterminée, et
si une telle caractéristique de mouvement prédéterminée est détectée dans le mouvement mesuré, le deuxième dispositif de communication (2) est sélectionné parmi un ou plusieurs dispositifs de communication détectés pour transférer l'appel sur la base d'une direction du mouvement mesuré du premier dispositif de communication (1) par rapport au deuxième dispositif de communication (2),
le mouvement prédéterminé correspondant à un mouvement d'une main exécutant un mouvement de lancer.

2. Procédé selon la revendication précédente, dans lequel une vélocité ou une accélération du premier dispositif de communication (1) est utilisée pour détecter un profil de vitesse de lancer typique ou un profil d'accélération de lancer comme une caractéristique de mouvement prédéterminée, ou une trajectoire du premier dispositif de communication (1) est utilisée pour détecter une trajectoire d'un mouvement de lancer comme une caractéristique de mouvement prédéterminée.

3. Procédé selon l'une quelconque des revendications précédentes, dans lequel la direction est déterminée sur la base de la trajectoire du mouvement.

4. Procédé selon l'une quelconque des revendications précédentes, dans lequel le deuxième dispositif de communication (2) est identifié parmi ledit dispositif de communication détecté par le biais d'au moins une connexion locale (6).

5. Procédé selon la revendication précédente, dans lequel l'appel est transféré vers le deuxième dispositif de communication (2) sur la connexion locale (6).

6. Procédé selon l'une quelconque des revendications précédentes, dans lequel l'appel est établi sur un premier réseau de communication (1) entre un serveur (3) et le premier dispositif de communication (1), et l'appel est transféré par le serveur (3) vers le deuxième dispositif de communication (2) en commutant l'appel établi depuis le premier dispositif de communication (1) et le premier réseau de communication (4) vers le deuxième dispositif de communication (2) sur un deuxième réseau de communication (5).

7. Procédé selon la revendication précédente, dans lequel l'étape de détection du deuxième dispositif de communication (2) comprend déterminer un identifiant du deuxième dispositif de communication (2) dans le deuxième réseau de communication (5), et l'étape de transfert de l'appel comprenant commuter l'appel dans le serveur (3) depuis le premier dispositif de communication (1) vers le deuxième dispositif de communication (2) sur la base de l'identifiant déterminé.

8. Procédé selon la revendication précédente, dans lequel l'identifiant comprend au moins un élément parmi un numéro de téléphone, une adresse de protocole Internet, et des informations de module d'identité d'abonné.

9. Procédé selon l'une quelconque des revendications précédentes, dans lequel le deuxième dispositif de communication (2) est détecté sur la base de la direction déterminée, d'une direction de référence, de la position du premier dispositif de communication (1) et de la position du deuxième dispositif de communication (2).

10. Procédé selon la revendication précédente, dans lequel la position du premier dispositif de communication (1) et/ou du deuxième dispositif de communication (2) est déterminée sur la base d'au moins un élément parmi un réseau local fournissant une connexion locale (6) entre le premier dispositif de communication (1) et le deuxième dispositif de communication (2), un réseau téléphonique mobile et un système de positionnement GPS par satellite.

11. Procédé selon la revendication 9 ou 10, dans lequel une direction de référence est déterminée sur la base d'au moins un élément parmi un champ magnétique de la terre et une connexion locale (6) entre le premier dispositif de communication (1) et le deuxième dispositif de communication (2).

12. Procédé selon l'une quelconque des revendications précédentes, dans lequel le premier dispositif de communication (1) est connecté à un réseau téléphonique mobile comme un premier réseau de communication (4) et le deuxième dispositif de communication (2) est connecté à au moins un élément parmi un réseau téléphonique mobile, un réseau téléphonique public commuté Internet et filaire comme un deuxième réseau de communication (5).

13. Programme informatique configuré pour exécuter le procédé selon l'une quelconque des revendications précédentes sur une unité de traitement.

14. Système permettant de transférer un appel depuis un premier dispositif de communication (1) vers un deuxième dispositif de communication (2) comprenant : un identifiant de dispositif de communication (77) destiné à détecter le deuxième dispositif de communication (2) ;
un dispositif de transfert d'appel (78) destiné à transférer un appel établi au niveau du premier dispositif de communication (1) vers le deuxième dispositif de communication (2) détecté ;
**caractérisé par**
un capteur de mouvement (71) destiné à mesurer un mouvement du premier dispositif de communication (1),
un détecteur de mouvement (72) destiné à comparer le mouvement mesuré avec une caractéristique de mouvement prédéterminée, et
un détecteur de direction (73) destiné à détecter, si une telle caractéristique de mouvement prédéterminée est détectée dans le mouvement mesuré, une direction du mouvement mesuré du premier dispositif de communication (1) par rapport au deuxième dispositif de communication (2), l'identifiant de dispositif de communication (77) étant configuré pour sélectionner le deuxième dispositif de communication (2) parmi un ou plusieurs dispositifs de communication détectés pour transférer l'appel sur la base de la direction détectée, le mouvement prédéterminé correspondant à un mouvement d'une main exécutant un mouvement de lancer.
